# EUROPEAN PATENT SPECIFICATION

(11) **EP 4 087 898 B1**
(45) Date of publication and mention of the grant of the patent: **14.10.2026**
(21) Application number: 21703090.7
(22) Date of filing: 06.01.2021
(51) Int. Cl.: C08L 7/00, C08L 21/00, C08G 8/02, C08G 8/20, C09J 161/04, C09J 161/12

(54) **PHLOROGLUCINOLIC RESINS, METHODS OF MAKING, AND USES IN RUBBER COMPOSITIONS**
PHLOROGLUCINOLHARZE, VERFAHREN ZU IHRER HERSTELLUNG UND IHRE VERWENDUNGEN IN KAUTSCHUKMISCHUNGEN
RÉSINES PHLOROGLUCINOLIQUES, PROCÉDÉS DE PRÉPARATION ET UTILISATIONS DANS DES COMPOSITIONS DE CAOUTCHOUC

(30) Priority: 09.01.2020 US 202062958789 P
(43) Date of publication of application: 16.11.2022
(73) Proprietor: Sumitomo Chemical Advanced Technologies, LLC, D.B.A. Sumika Electronic Materials, Phoenix AZ 85034 (US); Sumitomo Chemical Company, Limited, Tokyo 104-8260 (JP)
(72) Inventor: ITAHASHI, Tamon, Cheswick, Pennsylvania 15024 (US); NOBUOKA, Toshihiro, Pittsburgh, Pennsylvania 15238 (US); WALKUP, C. Michael, New Kesington, Pennsylvania 15068 (US)
(74) Representative: Tetzner, Michael
(86) International application number: PCT/US2021/012237
(87) International publication number: WO 2021/141934

(56) References cited:
- GB-A- 590 622
- JP-A- 2000 037 963
- US-A- 2 462 608
- US-A- 2 477 641
- US-A1- 2011 144 234
- US-A1- 2017 153 548
- US-A1- 2017 174 006
- US-A1- 2018 009 972
- US-A1- 2019 145 493
- ZHONGLIANG XU ET AL: "An Expedient Approach to the Benzopyran Core: Application to Synthesis of the Natural Products ( )-Xyloketals and ( )-Alboatrin", CHINESE JOURNAL OF CHEMISTRY, ZHONGGUO KEXUEYUAN, CN, vol. 28, no. 12, 7 January 2011 (2011-01-07), pages 2441 - 2446, XP071927763, ISSN: 1001-604X, DOI: 10.1002/CJOC.201190018
- PIZZI ET AL: "Condensates of phenol, resorcinol, phloroglucinol, and pyrogallol as model compounds of flavonoid A- and B-rings with formaldehyde", CA, CHEMICAL ABSTRACTS SERVICE, COLUMBUS, OHIO, US, 1 January 1979 (1979-01-01), XP002792003, DOI: 10.1002/APP.1979.070240618

## Description

### FIELD OF THE INVENTION

This invention relates to solid phloroglucinolic resins and methods for making the same. Such solid phloroglucinolic resins may be useful in vulcanizable rubber compositions.

### BACKGROUND OF THE INVENTION

Resorcinol-formaldehyde resins, also referred to as RF resins or resorcinolic resins, which are formed as the reaction product of resorcinol and formaldehyde, have been widely used in various applications including rubber compounding. In rubber compound formulations, solid RF resins have long been used to enhance rubber properties such as the adhesion properties between rubber and reinforcing materials and the dynamic properties in articles such as tires, belts and hose products.

Resorcinolic resins generally have 10 to 20% unreacted or free resorcinol. The amount of free resorcinol can be a critical factor when balancing important properties. The presence of free resorcinol, however, can be problematic. For example, free resorcinol can volatilize during rubber mixing, such volatilization is often referred to as fuming, and thereby creates added issues to the rubber mixing process. Further, the presence of the free resorcinol contributes to the hygroscopicity of the resorcinolic resin, which in turn creates storage and handling problems.

Formaldehyde has been used to produce resorcinol-formaldehyde resins for many years. In view of its widespread use, toxicity, and volatility, formaldehyde presents potential health and environmental problems. In 2011, the US National Toxicology Program described formaldehyde as known to be a human carcinogen.

Accordingly, the need exists to create environmentally friendly adhesives that do not use resorcinol and formaldehyde (or other aldehydes). Unfortunately, all known prior art adhesive resins to date that do not include resorcinol and formaldehyde have generally been found to have lower reactivity that results in unsatisfactory rubber performance and/or processing issues. For example, a resin's softening point may be adversely affected, causing difficulty in use and processing. That is, a softening point that is too high causes difficulty during mixing with the rubber compound, while a softening point that is too low leads to handling issues. Therefore, it is necessary to balance the competing factors of reactivity and softening point.

The use of phloroglucinols in aqueous adhesive compositions is well known in the art. For example, in U.S. Patent Application Publication No. US 2014/0235125 an aqueous adhesive composition is noted to include a phenol/aldehyde resin; and an unsaturated elastomer latex. The phenol/aldehyde resin is based on at least an aromatic polyaldehyde bearing at least two aldehyde functional groups and including at least one aromatic nucleus; and phloroglucinol.

In U.S. Patent Application Publication No. US 2019/0119535, an aqueous adhesive composition includes a thermosetting resin and an unsaturated elastomer latex. The thermosetting resin may include an aromatic compound bearing at least two functions, one of those functions being a hydroxymethyl function, and the other being an aldehyde function or a hydroxymethyl function. Generally, while phloroglucinol is disclosed in both references, both compositions are noted to be aqueous (not a solid) and preferably contains an aldehyde (not a ketone).

JP 2000 037963 A describes a resin obtained by reacting phloroglucinol with ketones under acid catalysis.

### SUMMARY OF THE INVENTION

At least one aspect of the present invention provides a solid phloroglucinolic resin comprising the reaction product of a phloroglucinolic compound, preferably a phloroglucinol, and a ketone. In various embodiments, the ketone may be selected from the group consisting of acetone, methyl ethyl ketone, diethyl ketone, ethyl butyl ketone, diisobutyl ketone, methyl isopropyl ketone, diisopropyl ketone, and methyl isobutyl ketone. In other embodiments, the ketone may be selected from the group consisting of acetone, methyl ethyl ketone, and methyl isobutyl ketone. In at least one embodiment, the ketone is acetone. In another embodiment, the ketone is methyl ethyl ketone. In yet another embodiment, the ketone is methyl isobutyl ketone.

In order to produce the solid phloroglucinolic resin, the phloroglucinolic compound is reacted with a ketone in the presence of an acid catalyst. In at least one embodiment, the acid catalyst is selected from inorganic acids, acid cation exchange resins, and combinations thereof. In at least one embodiment, the inorganic acid is thioglycolic acid. In at least another embodiment, the acid cation exchange resins include sulfuric acid or hydrochloric acid.

Still other aspects of the invention provide a vulcanizable rubber composition comprising a vulcanizable rubber; a curative; and solid phloroglucinolic resin comprising the reaction product of a phloroglucinolic compound and a ketone. Furthermore and advantageously, it will be appreciated that the vulcanized rubber compositions of the present invention exhibit advantageous rubber properties such as the adhesion, hardness, and dynamic properties compared to conventional products, without affecting cure times upon vulcanization.

Generally, it will be appreciated that the present invention provides a solid phloroglucinolic resin including multiple phloroglucinolic units defined by formula (I) 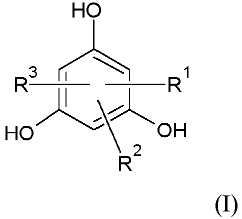 wherein at least one of R1, R2, and R3 combines with a second phloroglucinolic unit to form a di-substituted methylene bridge, wherein the second one of R1, R2, and R3 is a hydrogen atom or combines with a third phloroglucinolic unit to form another di-substituted methylene bridge, and wherein the third one of R1, R2 and R3 is a hydrogen atom.

The solid phloroglucinolic resin, as above, is further defined by formula (II) 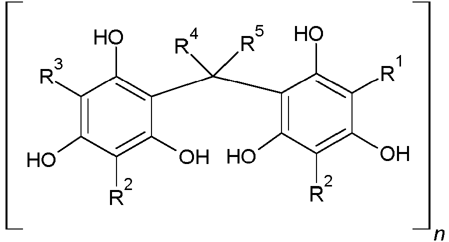 wherein n is an integer from 1 to 20, wherein R1 in a first phloroglucinolic unit on the left has been replaced with a di-substituted methylene bridge at the 2 position, and R3 in the second phloroglucinolic unit on the right has been replaced with the same di-substituted methylene bridge at the 6 position; wherein R3 on the first phloroglucinolic unit on the left and R1 on the second phloroglucinolic unit on the right form separate di-substituted methylene bridges, or can be a hydrogen atom, while R2 is a hydrogen atom, and wherein R4 and R5 may be the same or different, and are alkyl groups, where the resin has a Mw of greater than 270 and less than 900 g/mole.

In some embodiments based upon the resin above, the solid phloroglucinolic resin may have R4 and R5 as both being methyl groups, wherein the di-substituted methylene bridge formed is an isopropyliden bridge. In other embodiments based upon the resin above, R4 may be an ethyl group and R5 may be a methyl group, wherein the di-substituted methylene bridge formed is a 2,2 di-substituted butane bridge. In still other embodiments based upon the resin above, R4 may be an isopropyl group and R5 may be a methyl group, wherein the di-substituted methylene bridge formed is a 2,2 di-substituted, 4-methyl pentane bridge.

It is yet another aspect of the invention to provide a solid phloroglucinolic resin comprising the reaction product of a phloroglucinol and a ketone in the presence of an acid catalyst. For such a resin, the ktone may be selected from the group consisting of acetone, methyl ethyl ketone (MEK), diethyl ketone, ethyl butyl ketone, diisobutyl ketone, methyl isopropyl ketone, diisopropyl ketone, and methyl isobutyl ketone (MIBK). In some embodiments, the ketone may be selected from the group consisting of acetone, methyl ethyl ketone, and methyl isobutyl ketone. In some embodiments, the acid catalyst is selected from the group consisting of inorganic acids and acid cation exchange resins.

In one or more embodiments based upon the resins above, a molar ratio of ketone to phloroglucinol may be more than 1:1 and less than 20:1. In one or more embodiments based upon the resins above, the resin may include less than 40 wt.% unreacted phloroglucinol. In one or more embodiments based upon the resins above, the resin may have a weight average molecular weight (Mw) of greater than 400 and less than 700 g/mole. In one or more embodiments based upon the resins above, the resin may have a softening point of greater than 80 °C. In one or more embodiments based upon the resins above, the resin may include less than 1.5 wt.% water. In one or more embodiments based upon the resins above, the resin may have pentamer or higher oligomer content of less than 55% according to GPC using a polystyrene standard.

It is still another aspect of the present invention to provide a vulcanizable rubber composition comprising a vulcanizable rubber, a curative, and a solid phloroglucinolic resin as described above. In yet another aspect, a vulcanized rubber prepared from the vulcanizable composition above may be provided.

### DETAILED DESCRIPTION

The present invention is based, at least in part, on the discovery of a solid phloroglucinolic resin that can replace a solid RF resin when compounded into a vulcanizable rubber composition. Such a solid phloroglucinolic resin does not use resorcinol or an aldehyde, such as formaldehyde. Instead, the solid phloroglucinolic resin includes a plurality of phloroglucinolic units generally defined by the formula (I) 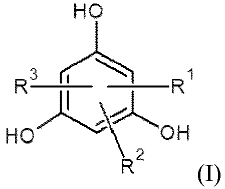 wherein at least one of R1, R2, and R3 combines with a second phloroglucinolic unit to form a di-substituted methylene bridge, wherein the second one of R1, R2, and R3 is a hydrogen atom or, combines with a third phloroglucinolic unit to form another di-substituted methylene bridge, and wherein the third one of R1, R2 and R3 is a hydrogen atom. The structure employed in formula (I) is intended to represent the fact that the di-substituted methylene bridge(s) of R1, R2 or R3 can be bonded to the 2, 4, or 6 position on the aromatic ring. Also, the hydrogen atom of R1, R2 or R3 is also located at the 2, 4, or 6 positions. The skilled person will appreciate that any carbon atom within the aromatic ring that is not bonded to a hydroxyl group, can bond to R1, R2, or R3, and will include either a hydrogen atom or be a part of a di-substituted methylene bridge.

Generally, the di-substituted methylene bridge includes a methylene bridge with at least two C1 to C10 alkyl groups extending from the methylene bridge. In another embodiment, the methylene bridge includes at least two C1 to C5 alkyl groups extending therefrom. In yet another embodiment, the methylene bridge includes at least two C1 to C4 alkyl groups extending therefrom. In still another embodiment, the methylene bridge includes at least two C1 to C3 alkyl groups extending therefrom. In yet a further embodiment, the methylene bridge includes at least two C1 to C2 alkyl groups extending therefrom.

More particularly, the phloroglucinolic resin of the present invention are described as shown in Formula (II) 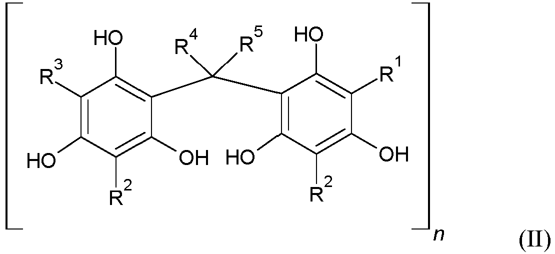 wherein n is an integer from 1 to 20, wherein R1 in the phloroglucinolic unit on the left has been replaced with a di-substituted methylene bridge as shown at the 2 position, and R3 in the phloroglucinolic unit on the right has been replaced at the 6 position. R3 on the left and R1 on the right can also be the same di-substituted methylene bridge as shown for herein, or can be a hydrogen atom, while R2 can be a hydrogen atom in this embodiment shown. R4 and R5 may be the same or different, and are alkyl groups. In one embodiment, R4 and R5 may both be methyl groups, wherein the di-substituted methylene bridge formed is an isopropyliden bridge. In another embodiment, R4 may be an ethyl group and R5 may be a methyl group, wherein the di-substituted methylene bridge formed is a 2,2 di-substituted butane bridge. In still another embodiment, R4 may be an isopropyl group and R 5 may be a methyl group, wherein the di-substituted methylene bridge formed is a 2,2 di-substituted, 4-methyl pentane bridge. In some embodiments, n is an integer from 1 to 8 and in other embodiments, n is an integer from 1 to 5.

As suggested above, aspects of the invention benefit from the solid nature of the phloroglucinolic resins. Accordingly, the phloroglucinolic resins of the present invention can be characterized by the absence of or limited amounts of water present within the phloroglucinolic resin. In one or more embodiments, the solid phloroglucinolic resins of the present invention include less than 3 wt.%, in other embodiments less than 2 wt.%, in other embodiments less than 1 wt.%, in other embodiments less than 0.5 wt.%, in other embodiments less than 0.25 wt.%, and in other embodiments less than 0.10 wt.% water relative to the total weight of the solid resin. In one or more embodiments, the phloroglucinolic resins of the present invention are substantially devoid of water, which refers to that amount of water or less that would otherwise have an appreciable impact on the resins or their use. In particular embodiments, the phloroglucinolic resins of the present invention are devoid of water. As the skilled person appreciates, the amount of water in the resin can be determined by a variety of methods including, but not limited to, Karl Fischer titration methods. In particular embodiments, the amount of water is determined using a modified version of ASTM E 203, where the method is modified by replacing the injection septum with a stopper and the pulverized resin is added through this port.

The solid phloroglucinolic resins of the present invention are characterized by a low molecular weight. As the skilled person will appreciate, the molecular weight of phloroglucinolic resins can be determined using several methodologies, and the molecular weight is typically reported in terms of weight average molecular weight (Mw) or number average molecular weight (Mn). Useful techniques for determining the molecular weight of solid phloroglucinolic resins include gel permeation chromatography using polystyrene standards (GPC) or vapor phase osmometry.

The solid phloroglucinolic resin compositions of the present invention are characterized by weight average molecular weight (Mw), which may be determined by GPC using a polystyrene standard. The Mw of the resin is greater than 270, preferably greater than 290, greater than 310, greater than 350, and most preferably greater than 400 g/mole. The Mw of the resin is less than 900, preferably less than 800, and most preferably less than 700 g/mole. The solid phloroglucinolic resin of the present invention is characterized by a Mw that is from about 270 to about 900, preferably from about 310 to about 900, more preferably from about 350 to about 800, and most preferably from about 400 to about 700 g/mole.

In one or more embodiments, the solid phloroglucinolic resin compositions of the present invention may be characterized by a softening point that is greater than 90°C, in other embodiments greater than 100°C, in other embodiments greater than 110°C, in other embodiments greater than 120°C, in other embodiments greater than 130°C, in other embodiments greater than 140°C, in other embodiments greater than 160°C and in other embodiments greater than 180°C. In these or other embodiments, the solid phloroglucinolic resin of the present invention may be characterized by a softening point that is from about 80°C to about 180 °C, in other embodiments from about 95°C to about 140 °C, and in other embodiments from about 100°C to about 130°C. The softening point of the resins can be determined according to the following method with reference to the latest edition of ASTM E 28 and ASTM D 6090. This method can employ a Mettler softening point apparatus, which may include a control unit Model FP-90 or equivalent, a furnace Model FP-83 or equivalent, and cartridge assemblies, a timer, porcelain evaporating dishes (about 3" in diameter), and a hot plate. The method may employ cups of pitch type drilled to 0.257" opening (F drill), and a 440 stainless steel ball (0.2500" in diameter and must pass through cups). The apparatus may be calibrated according to ASTM D 6090. A resin sample (~15 grams) can be melted in a porcelain or aluminum evaporating dish on the surface of a hot plate at 600 - 650 °F, for approximately 4 minutes. After melting, the sample can be poured into cups that had been preheated to at least the temperature of the molten resin. The quantity of resin sample poured into the cups should be such that after solidification, the excess can be removed with a heated spatula or putty knife. The sample can then be cooled to room temperature in a desiccator, the cartridge can then be assembled so that the ball rests on the top of the resin. The assembled cartridge is then placed in the furnace, which can be preset to 85 °C or 10-15 °C below the expected softening point. The heating rate can be set at 1 °C/min. The cartridge can then be turned until it is locked into position. After 30 seconds, the operation of softening point apparatus can be initiated, thereby yielding the completed softening point measurement.

Depending upon the ketone used with the phloroglucinolic compound, a bridge structure is developed much like the methylene bridge structures set forth in known RF resins. More particularly, when a ketone is combined with a phloroglucinolic compound, such as a phloroglucinol, a solid phloroglucinolic resin is produced having a di-substituted methylene bridge structure and a relatively low molecular weight. Importantly, this new phloroglucinolic resin does not use resorcinol and formaldehyde.

More specifically, and in one or more embodiments, the phloroglucinolic resin of the present invention is generally prepared by reacting a phloroglucinolic compound with a ketone in the presence of an acid catalyst. That is, the phloroglucinolic resin comprises the reaction product of phloroglucinol and a ketone in the presence of an acid catalyst. As the skilled person appreciates, and as noted above, phloroglucinolic compounds include, but are not limited to, phloroglucinol, which is also referred to as trihydric phenol or 1,3,5-dihydroxy benzene, or free phloroglucinol. The chemical formula for phloroglucinol is set forth in Formula (III) below.

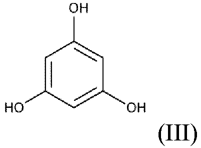

The molar ratio of ketone to phloroglucinol may vary from 1:1 to 20:1. In some other embodiments, the molar ratio may vary more than 1:1 to less than 20:1. In other embodiments, the molar ration may vary from 1.5:1 to 16:1, and in other embodiments, the molar ratio may vary from more than 1.5:1 to less than 15:1. In yet other embodiments, the molar ration may vary from 2:1 to 16:1, and in other embodiments, the molar ratio may vary from more than 2:1 to less than 15:1. In still other embodiments, the molar ratio of ketone to phloroglucinol may vary from about 1.5:1 to about 10:1, in other embodiments from about 1.5:1 to about 8:1, and in still other embodiments from about 2:1 to about 6:1.

In one or more embodiments, the ketone may be selected from the group consisting of acetone, methyl ethyl ketone, diethyl ketone, ethyl butyl ketone, diisobutyl ketone, methyl isopropyl ketone, diisopropyl ketone, and methyl isobutyl ketone. In particular embodiments, the ketone is acetone. In other embodiments the ketone is methyl ethyl ketone, and in still other embodiments, the ketone is methyl isobutyl ketone.

The condensation reaction of phloroglucinol with the ketone may be carried out in the presence of a catalyst. Useful catalysts include conventional acid catalysts. Examples of suitable acid catalysts include inorganic acids such as phosphoric acid, hydrochloric acid, and sulfuric acid and acid ion exchange resins such as acid cation exchange resins. Other catalysts can be used as well. Such catalysts include inorganic acid catalysts such as, for example, thioglycolic acid.

According to aspects of the invention, the reaction of the phloroglucinol (or phloroglucinolic compound) with a ketone is carried out in the presence of an organic solvent. Examples of suitable organic solvents include polar solvents and the non-polar solvents. In one or more embodiment, solvent may be selected from acetone, methyl isobutylketone (MIBK), methyl tert-butyl ether, cyclopentyl methyl ether, ethyl acetate, methanol, ethanol, isopropanol, n-propanol, acetonitrile, dimethyl sulfoxide, dimethyl formamide and tetrahydorofuran, chlorobenzene, dichrolobenzene, pentane, hexane, toluene and xylene. In one embodiment, acetone and toluene is preferably used.

In one or more embodiments, the reaction (formation of the resin) may be carried out in the temperature range of 10 to 150 °C, and in other embodiments from about 25 to about 130 °C. In one embodiment, the reaction temperature is more than 30°C, in another embodiment, the reaction temperature is more than 40°C, in another embodiment, the reaction temperature is more than 50°C, and in other embodiment, the reaction temperature is more than 60°C.

In one or more embodiments, the reaction of the phloroglucinolic compound with the aldehyde or ketone takes place in the presence of threshold amounts of the organic solvent. Specifically, the amount or organic solvent present during the reaction can be described with reference to the amount of phloroglucinol charged to the reaction (i.e. in the initial mixture). In one or more embodiments, the initial mixture in which the reaction takes place includes greater than 30 parts by weight, in other embodiments greater than 50 parts by weight and in other embodiments greater than 70 parts by weight organic solvent per 100 parts by weight phloroglucinol. In these or other embodiments, the mixture (prior to aldehyde addition) in which the reaction takes place includes greater less than 500 parts by weight, in other embodiments less than 400 parts by weight, and in other embodiments less than 300 parts by weight organic solvent per 100 parts by weight resorcinol. In one or more embodiments, the mixture in which the reaction takes place includes from about 30 to about 500, in other embodiments from about 50 to about 400, and in other embodiments from about 70 to about 300 by weight organic solvent per 100 parts by weight resorcinol.

The skilled person can readily determine the appropriate level of acid catalyst that should be used. The amount of acid catalyst introduced to the mixture and be described with reference to the amount of phloroglucinol initially present. In one or more embodiments, the initial mixture in which the reaction takes place includes greater than 0.1 parts by weight, in other embodiments greater than 0.2 parts by weight, in other embodiments greater than 0.5 parts by weight, in other embodiments greater than 1 parts by weight, in other embodiments greater than 2 parts by weight and in other embodiments greater than 5 parts by weight inorganic catalyst per 100 parts by weight phloroglucinol. In these or other embodiments, the mixture in which the reaction takes place includes greater less than 50 parts by weight, in other embodiments less than 40 parts by weight and in other embodiments less than 30 parts by weight inorganic catalyst per 100 parts by weight phloroglucinol. In one or more embodiments, the mixture in which the reaction takes place includes from about 0.1 to about 50, in other embodiments from about 1 to about 40, and in other embodiments from about 5 to about 30 parts by weight inorganic catalyst per 100 parts by weight phloroglucinol.

In one or more embodiments, the initial mixture in which the reaction takes place includes greater than 10 parts by weight, in other embodiments greater than 25 parts by weight and in other embodiments greater than 50 parts by weight acid cation exchange catalyst per 100 parts by weight phloroglucinol. In these or other embodiments, the mixture in which the reaction takes place includes greater less than 500 parts by weight, in other embodiments less than 400 parts by weight and in other embodiments less than 200 parts by weight inorganic catalyst per 100 parts by weight phloroglucinol. In one or more embodiments, the mixture in which the reaction takes place includes from about 10 to about 500, in other embodiments from about 25 to about 400, and in other embodiments from about 50 to about 200 parts by weight acid cation exchange catalyst per 100 parts by weight phloroglucinol.

The skilled person can readily determine the appropriate level of any of the thiols or sulfides that should be used as co-catalysts with acid catalyst in the reaction. The co-catalyst will enhance the reaction rate by using the acidic catalyst and phloroglucinolic compounds together. In one or more embodiments, co-catalyst may be selected from the group consisting of sodium sulfate, sodium thiosulfate, sodium bisulfite, mercaptoethanol, sodium dithionite, thioglycolic acid, sodium sulfide and ethanethiol. In particular embodiments, the co-catalyst is thioglycolic acid.

The amount of cocatalyst introduced to the mixture and be described with reference to the amount of phloroglucinol initially present. In one or more embodiments, the initial mixture in which the reaction takes place includes greater than 0.01 parts by weight in other embodiments greater than 0.5 parts by weight and in other embodiments greater than 1 parts by weight inorganic catalyst per 100 parts by weight phloroglucinol. In these or other embodiments, the mixture in which the reaction takes place includes greater less than 30 parts by weight, in other embodiments less than 20 parts by weight and in other embodiments less than 10 parts by weight inorganic catalyst per 100 parts by weight phloroglucinol. In one or more embodiments, the mixture in which the reaction takes place includes from about 0.01 to about 30, in other embodiments from about 0.5 to about 20, and in other embodiments from about 1 to about 10 parts by weight inorganic catalyst per 100 parts by weight phloroglucinol.

Turning to the production of particular phloroglucinolic resins, it will be appreciated that when acetone is combined with a phloroglucinolic compound, such as a phloroglucinol, a phloroglucinolic resin is produced having an isopropyliden bridge structure and a relatively low molecular weight. The reaction is more particularly shown in Scheme I below. 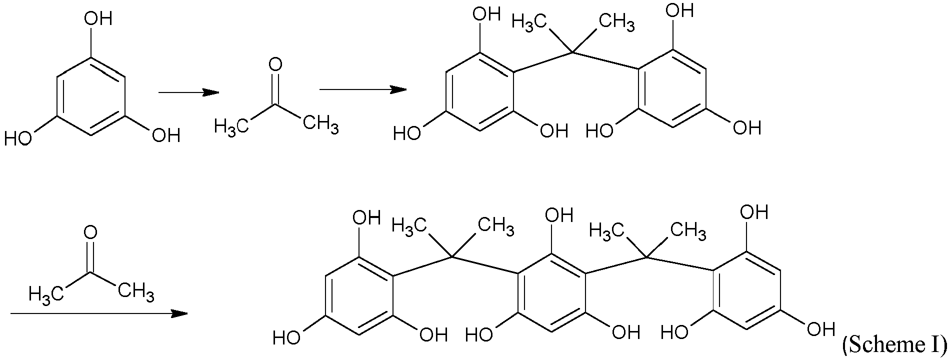 It will be appreciated that each isopropyliden bridge structure is a di-substituted methylene bridge having methyl groups as the substituted groups.

Similarly, when methyl ethyl ketone is used and combined with a phloroglucinolic compound, such as a phloroglucinol, a phloroglucinolic resin is produced having a 2,2- di-substituted butane bridge structure. The reaction is more particularly shown in Scheme II below. 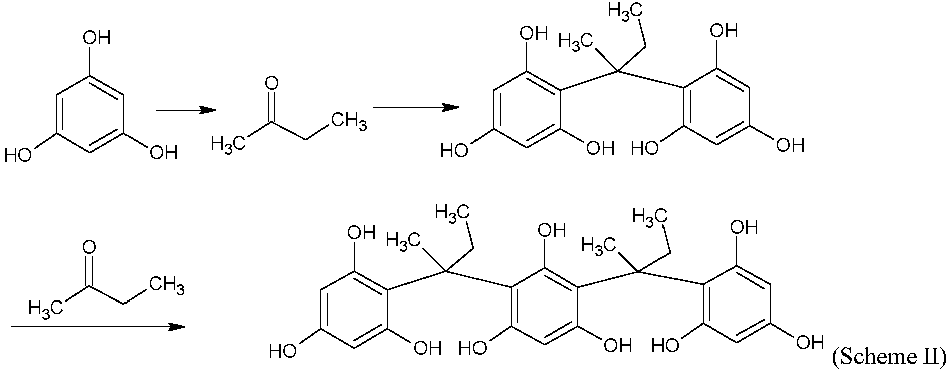 It will be appreciated that each 2,2-di-substituted butane bridge structure is a di-substituted methylene bridge having one ethyl group and one methyl group extending from the methylene bridge as the substituted groups.

Further, when methyl isobutyl ketone is employed and combined with a phloroglucinolic compound such as a phloroglucinol, a phloroglucinolic resin is produced having a 2,2-isopropyl, 4-methyl pentane bridge structure. The reaction is more particularly shown in Scheme III below. 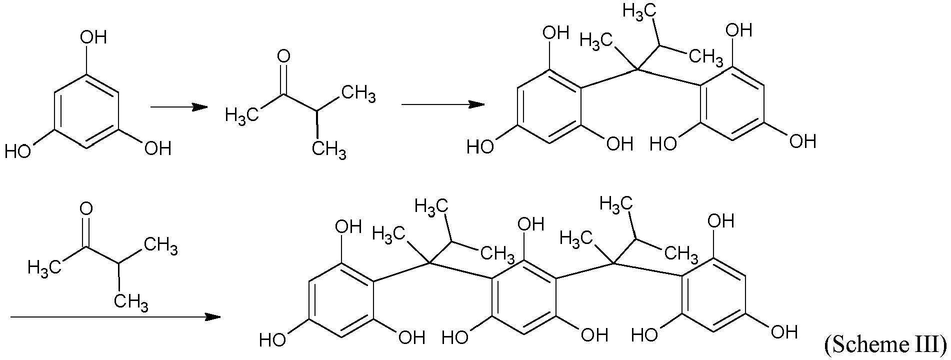 It will be appreciated that each 2,2-di-substituted, 4-methyl pentane bridge structure is a di-substituted methylene bridge having one isopropyl group and one methyl group extending from the methylene bridge as the substituted groups.

Upon removal of the solvent, the resultant product is a solid phloroglucinolic resin. Importantly, when compounded into vulcanizable rubber compositions, these solid phloroglucinolic resins have given rise to unexpected results including, among other things, improvements in the physical properties of the cured rubber (e.g. Shore A Hardness) and dynamic properties of the cured rubber (e.g. higher G'), and have been found to have adequate processing characteristics, such as sufficient cure times, previously not seen in alternative resins that do not include resorcinol.

As suggested above, the phloroglucinolic resins of the present invention are useful in vulcanizable rubber compositions. Besides the use of the phloroglucinolic resins of the present invention, the vulcanizable compositions may otherwise be conventional in nature. Accordingly, the rubber compositions may include a vulcanizable rubber, a curative, a filler, and a phloroglucinolic resin of the present invention.

With regard to the rubber compositions of the present invention, the rubber compositions may include a rubber component that may include any natural rubber, synthetic rubber or combination thereof. Examples of synthetic rubber include but are not limited to styrene butadiene copolymer, polyisoprene, polybutadiene, acrylonitrile butadiene styrene, polychloroprene, polyisobutylene, ethylene-propylene copolymer and ethylene-propylene-diene rubber.

The rubber compositions may also include one or more of the normal additives used in such compositions. Examples of such additives include carbon black, cobalt salts, stearic acid, silica, silicic acid, sulfur, peroxides, zinc oxide, fillers, antioxidants and softening oils.

Aspects of the present invention relate to the amount or loading of the solid Phloroglucinolic resins of the present invention within the vulcanizable compositions. In one or more embodiments, the vulcanizable compositions of the present invention include greater than 0.5, in other embodiments greater than 1.0, in other embodiments greater than 1.5, and in other embodiments greater than 2.0 parts by weight solid phloroglucinolic resin per 100 parts by weight rubber. In these or other embodiments, the vulcanizable compositions of the present invention include less than 7.0, in other embodiments less than 6.0, in other embodiments less than 5.0, and in other embodiments less than 4.0 parts by weight of the solid phloroglucinolic resin per 100 parts by weight rubber. In one or more embodiments, the vulcanizable compositions of the present invention include from about 0.5 to about 7.0, in other embodiments from about 1.0 to about 6.0, in other embodiments from about 1.5 to about 5.0, and in other embodiments from about 2.0 to about 4.5 parts by weight of the phloroglucinolic resin per 100 parts by weight rubber.

The rubber composition may also include one or more of a methylene donor component. The methylene donor component is any compound that generates formaldehyde upon heating during the vulcanization. Examples of such compounds are set forth in U.S. Pat. No. 3,751,331. Preferred methylene donor compounds are hexamethylenetetramine, di-methylol melamine, tri-methylol melamine, tetra-methylol melamine, penta-methylol melamine, hexa-methylol melamine, and mixtures thereof. The methylol melamines may be completely or partially etherified or esterified such as hexamethoxymethylol melamine. The methylene donor may be present in concentrations from about 0.1 to 15 parts per one hundred parts rubber or in other embodiments from 0.1 to 10 parts per one hundred parts rubber. The ratio of methylene donor to solid phloroglucinolic resin may be from 1:10 to 10:1.

As should be appreciated, the rubber component, additives, reinforcing materials and methylene donor compounds are known. In addition, the method of vulcanizing the compositions is known. The improvements of the present invention are related to solid phloroglucinolic resins.

The rubber compositions are prepared and used in the conventional manner of preparing and using such compositions. Namely, the compositions can be prepared by solid-state mixing.

In light of the foregoing, it will be appreciated that the rubber compositions produced according to the present invention may be used for various rubber applications or rubber goods. The uncured and cured rubber compositions of this invention may be used in tire applications or used to prepare portions of a tire, such as tire treads, belt skim stock, sidewalls, bead compounds, carcasses, or other areas of a tire. Other applications include rubber products that are useful for engine mounts and bushings. Still other examples of applications in which the uncured and cured rubber compositions of this invention may be used or used to prepare include technical or mechanical rubber goods such as hoses, pneumatic belts, and conveyor belts.

### EXAMPLES

In order to demonstrate the practice of the present invention, the following examples have been prepared and tested. The examples should not, however, be viewed as limiting the scope of the invention. The claims will serve to define the invention. The abbreviation PG means "Phloroglucinolic."

### PG Resin Example 1.

25.2 g of phloroglucinol, 47.0 g of acetone, 50.4 g of toluene, 1.1 g of thioglycolic acid and 1.2 g of 98 % sulfuric acid were charged to a flask and heated to 80 °C. The reaction mixture was maintained at about 80°C for 9 hours. Then, 3.8 g of a 25% solution of sodium hydroxide was added. Solvent was then removed by vacuum distillation to 155 °C. When a temperature of 155 °C was reached, the vacuum was released and the resin was discharged from the flask.

### PG Resin Example 2.

30.3 g of phloroglucinol, 69.7 g of acetone, 1.3 g of thioglycolic acid and 20.0 g of acid cation exchange catalyst (DIAION PK212LH, Mitsubishi Chemical Corporation) were charged to a flask and heated to 70 °C. The reaction mixture was maintained at about 70°C for 22 hours. Then, 0.8 g of a 25% solution of sodium hydroxide was added. Solvent was then removed by vacuum distillation to 155 °C. When a temperature of 155 °C was reached, the vacuum was released and the resin was discharged from the flask.

### PG Resin Example 3.

25.2 g of phloroglucinol, 24.4 g of acetone, 63.1 g of toluene, 1.1 g of thioglycolic acid and and 20.0 g of acid cation exchange catalyst (DIAION PK212LH, Mitsubishi Chemical Corporation) were charged to a flask and heated to 82 °C. The reaction mixture was maintained at about 82°C for 22 hours. Then, 1.2 g of a 25% solution of sodium hydroxide was added. Solvent was then removed by vacuum distillation to 155 °C. When a temperature of 155 °C was reached, the vacuum was released and the resin was discharged from the flask.

### PG Resin Example 4.

80.0 g of phloroglucinol, 114.3 g of acetone and 63.5 g of acid cation exchange catalyst (DIAION PK212LH, Mitsubishi Chemical Corporation) were charged to a flask and heated to 70 °C. The reaction mixture was maintained at about 70°C for 24 hours. Then, 0.1 g of a 25% solution of sodium hydroxide was added. Solvent was then removed by vacuum distillation to 155 °C. When a temperature of 155 °C was reached, the vacuum was released and the resin was discharged from the flask.

### PG Resin Example 5.

80.0 g of phloroglucinol, 114.3 g of acetone and 63.5 g of acid cation exchange catalyst (DIAION PK212LH, Mitsubishi Chemical Corporation) were charged to a flask and heated to 70 °C. The reaction mixture was maintained at about 70°C for 5 hours. Then, 0.1 g of a 25% solution of sodium hydroxide was added. Solvent was then removed by vacuum distillation to 155 °C. When a temperature of 155 °C was reached, the vacuum was released and the resin was discharged from the flask.

### PG Resin Example 6

25.2 g of phloroglucinol, 44.7 g of methyl ethyl ketone and 20.0 g of acid cation exchange catalyst (DIAION PK212LH, Mitsubishi Chemical Corporation) were charged to a flask and heated to 80 °C. The reaction mixture was maintained at about 80°C for 24 hours. Then, 0.1 g of a 25% solution of sodium hydroxide was added. Solvent was then removed by vacuum distillation to 155 °C. When a temperature of 155 °C was reached, the vacuum was released and the resin was discharged from the flask.

### PG Resin Example 7

50.0 g of phloroglucinol, 72.6 g of methyl ethyl ketone and 40.0 g of acid cation exchange catalyst (DIAION PK212LH, Mitsubishi Chemical Corporation) were charged to a flask and heated to 85 °C. The reaction mixture was maintained at about 85°C for 24 hours. Then, 0.1 g of a 25% solution of sodium hydroxide was added. Solvent was then removed by vacuum distillation to 155 °C. When a temperature of 155 °C was reached, the vacuum was released and the resin was discharged from the flask.

### PG Resin Example 8

50.0 g of phloroglucinol, 57.0 g of methyl ethyl ketone and 40.0 g of acid cation exchange catalyst (DIAION PK212LH, Mitsubishi Chemical Corporation) were charged to a flask and heated to 85 °C. The reaction mixture was maintained at about 85°C for 24 hours. Then, 0.1 g of a 25% solution of sodium hydroxide was added. Solvent was then removed by vacuum distillation to 155 °C. When a temperature of 155 °C was reached, the vacuum was released and the resin was discharged from the flask.

### PG Resin Example 9

25.2 g of phloroglucinol, 61.2 g of methyl isobutyl ketone and 20.0 g of acid cation exchange catalyst (DIAION PK212LH, Mitsubishi Chemical Corporation) were charged to a flask and heated to 117 °C. The reaction mixture was maintained at about 117°C for 22 hours. Then, 0.1 g of a 25% solution of sodium hydroxide was added. Solvent was then removed by vacuum distillation to 155 °C. When a temperature of 155 °C was reached, the vacuum was released and the resin was discharged from the flask.

TABLE 1 below provides a general description of the ingredients used in the formation of the phloroglucinolic resin. It will be appreciated that either sulfuric acid (H2SO4) or cation exchange catalyst used as the acid catalyst in these examples, and that some of the examples further employed a co-catalyst such as thioglycolic acid.

**TABLE 1.**

| | Phloroglucinolic Resin | | | | |
|---|---|---|---|---|---|
| | Ex.1 | Ex.2 | Ex.3 | Ex.4 | Ex.5 |
| Resin | | | | | |
| Solvent | Toluene Acetone | Acetone | Toluene Acetone | Acetone | Acetone |
| Molar A:Phg | 4:1 | 5:1 | 2:1 | 3:1 | 3:1 |
| Catalyst | H2SO4 | PK212LH | PK212LH | PK212LH | PK212LH |
| Co-catalyst | Thiogly-colic acid | Thiogly-colic acid | Thiogly-colic acid | - | - |

| TABLE 1 Continued | | | | | |
|---|---|---|---|---|---|
| | Phloroglucinolic Resin | | | | RF Resin (Comp.) |
| | Ex. 6 | Ex. 7 | Ex. 8 | Ex.9 | Ex. 10 |
| Resin | | | | | B-19-SC |
| Solvent | Methyl ethyl ketone | Methyl ethyl ketone | Methyl ethyl ketone | Methyl isobutyl ketone | |
| Molar A:Phg | 3:1 | 2.6:1 | 2:1 | 3:1 | |
| Catalyst | PK212LH | PK212LH | PK212LH | PK212LH | |
| Co-catalyst | - | - | - | - | |

It will be appreciated that, in order to provide a full analysis of the improvements provided by the uniquely prepared solid phloroglucinolic resins above, a resorcinol formaldehyde resin, available from Sumitomo Chemical under the tradename PENACOLITE^{®} RESIN B-19-SC was provided a comparative RF resin. Thus, rubber compounds containing the phloroglucinolic resins described in the examples and in TABLE 1, as well as the comparative RF resin also provided in TABLE 1, were prepared according to the rubber composition shown in TABLE 2.

**TABLE II: Formulation (parts by weight).**

| | |
|---|---|
| Natural Rubber | 100 |
| Carbon Black (HAF Black N326) | 55 |
| Zinc Oxide | 8 |
| Stearic Acid | 1 |
| N-(1,3-Dimethylbutyl)-N'-Phenyl-p-Phenylenediamine | 2 |
| Polymerized 1,2-Dihydro-2,2,4-Trimethylquinoline | 1 |
| Resin | 3 |
| Cobalt Salt (22% Co) | 0.45 |
| Insoluble Sulfur (20% Oil) | 5 |
| N, N-Dicyclohexyl-2-Benzothiazole Sulfenamide | 1 |
| Methylene Donor (HMMM, 72% Active) | 2.78 |

Rubber compositions containing each of the five phloroglucinolic resins were then tested as against a rubber composition contain the comparative RF resin (Example 6-Comparative), also set forth in TABLE 1. The rubber compositions were then tested for essentially the same properties and rubber performance characteristics.

The various physical properties and chemical analysis of the solid phloroglucinolic resin are provided in TABLE 3 below. It will be appreciated that, in evaluating the resin properties, the softening point of the resins was determined using the procedure described above and the molecular weight and oligomer distribution was determined by GPC analysis. The resultant rubber performance based upon the preparation of a vulcanized rubber as set forth below is also provided in TABLE 3. It will be appreciated that T'90 was measured with the Alpha Technologies MDR Rheometer (MDR2000) at 150°C, 0.5° arc and 1.6 Hz according to ASTM D-5289. The rubber compounds were cured at 150 °C, 10 tons pressure, according to parameters obtained from the MDR2000 rheometric test data. G' and tanδ, an indicator of compound hysteresis or heat build-up, was measured with a TA Instruments rheometer (ARES) at 2.0% torsional shear strain at 1Hz and 60°C and was measured shore A Hardness according to ASTM D-2240. Unaged pull out force and humidity aged (21 days, 85 °C/90RH) was measured according to ASTM D-2229.

**TABLE 3 - Composition, properties, and rubber performance of Examples 1-9**

| | Ex. 1 | Ex. 2 | Ex. 3 | Ex. 4 | Ex. 5 |
|---|---|---|---|---|---|
| **Physical Analysis** | | | | | |
| Softening point, °C | 124.0 | 99.5 | 171.8 | 110.3 | 115.3 |
| Moisture, % | 0.82 | 1.07 | 0.75 | 0.31 | 0.20 |
| | | | | | |

| **GPC Analysis** | | | | | |
|---|---|---|---|---|---|
| Monomer (%) | 13.9 | 27.8 | 2.3 | 16.4 | 33.8 |
| Dimer (%) | 4.5 | 5.6 | 1.7 | 4.9 | 2.0 |
| Trimer (%) | 7.7 | 6.4 | 33.1 | 5.3 | 4.3 |
| Tetramer (%) | 36.9 | 30.2 | 14.3 | 39.8 | 32.1 |
| Penta+(1000+) (%) | 37.0 | 30.0 | 48.6 | 33.6 | 27.8 |
| Mn | 530 | 450 | 610 | 496 | 458 |
| Mw | 607 | 527 | 681 | 567 | 540 |

| **Rubber performance** | | | | | |
|---|---|---|---|---|---|
| MH dNm | 37.6 | 34.1 | 33.1 | 33.8 | 33.6 |
| T'90, Time (minutes), 150 °C | 12.8 | 13.1 | 14.8 | 15.8 | 14.5 |
| Unaged, 100 % modulus, Mpa | 5.1 | 4.6 | 3.9 | 4.0 | 4.1 |
| G', 2.0% strain, 23°C | 17.8 | 16.5 | 14.1 | 14.5 | 14.6 |
| tan δ, 2.0% strain, 23°C | 0.194 | 0.197 | 0.216 | 0.209 | 0.210 |
| G', 5.0% strain, 23°C | 12.9 | 12.0 | 10.2 | 10.5 | 10.6 |
| tanδ, 5.0% strain, 23°C | 0.231 | 0.232 | 0.245 | 0.239 | 0.238 |
| Unage Pull Out Force, N | 1372 | 1358 | 1339 | 1234 | 1196 |
| Humidity aged Pull Out Force, N | 856 | 1065 | 1101 | 1059 | 1078 |
| Shore A Hardness | 82.0 | 79.6 | 76.9 | 78.9 | 79.3 |
| | | | | | |

| | Ex. 6 | Ex. 7 | Ex. 8 | Ex.9 | Comp. Ex.10 |
|---|---|---|---|---|---|
| **Physical Analysis** | | | | | |
| Softening point, °C | 102.5 | 83.7 | 100.5 | 102.7 | 110.3 |
| Moisture, % | 0.17 | 0.75 | 0.31 | 0.25 | 0.29 |
| | | | | | |

| **GPC Analysis** | | | | | |
|---|---|---|---|---|---|
| Monomer (%) | 21.7 | 1.2 | 13.1 | 6.5 | |
| Dimer (%) | 63.6 | 67.5 | 71.7 | 68.3 | |
| Trimer (%) | 14.7 | 25.7 | 15.2 | 17.5 | |
| Tetramer (%) | 0.0 | 5.6 | 0.0 | 7.7 | |
| Penta+(1000+) (%) | 0.0 | 0.0 | 0.0 | 0.0 | |
| Mn | 437 | 565 | 515 | 536 | |
| Mw | 467 | 591 | 546 | 567 | |

| TABLE 3 Continued | | | | | |
|---|---|---|---|---|---|
| | Ex. 6 | Ex. 7 | Ex. 8 | Ex. 9 | Comp. Ex. 10 |
| **Rubber performance** | | | | | |
| MH dNm | 35.1 | 35.2 | 37.1 | 37.5 | 30.9 |
| T'90, Time (minutes), 150 °C | 15.1 | 15.9 | 14.3 | 14.6 | 15.4 |
| Unaged, 100 % modulus, Mpa | 4.0 | 3.8 | 4.8 | 4.4 | 3.6 |
| G', 2.0% strain, 23°C | 15.9 | 15.3 | 14.7 | 14.5 | 12.7 |
| tan δ, 2.0% strain, 23°C | 0.209 | 0.208 | 0.208 | 0.202 | 0.220 |
| G', 5.0% strain, 23°C | 11.4 | 11.1 | 10.5 | 10.5 | 9.2 |
| tanδ, 5.0% strain, 23°C | 0.241 | 0.238 | 0.242 | 0.234 | 0.247 |
| Unage Pull Out Force, N | 1172 | 1234 | 1338 | 1291 | 1122 |
| Humidity aged Pull Out Force, N | 1165 | 1167 | 866 | 1066 | 867 |
| Shore A Hardness | 80.5 | 80.0 | 80.8 | 80.1 | 74.6 |
| | | | | | |

In comparison between the phloroglucinolic resins of the present invention and those of the comparative examples, it will be appreciated that the phloroglucinolic resins of the present invention improve the mechanical properties of the cured rubber compound and provides better adhesion properties compared to the conventional resorcinol formaldehyde resin.

Still further, the phloroglucinolic resins of the present invention have significantly less range of Mw that do the comparative example. In the present invention, a Mw of greater than 400 and less than 700 g/mole, while I the comparative example. The Mw is greater than 700 g/mol.

## Claims

1. A solid phloroglucinolic resin including multiple phloroglucinolic units defined by formula (I) 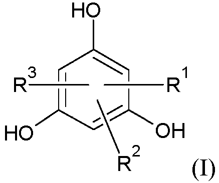
wherein at least one of R1, R2, and R3 combines with a second phloroglucinolic unit to form a di-substituted methylene bridge, wherein the second one of R1, R2, and R3 is a hydrogen atom or combines with a third phloroglucinolic unit to form another di-substituted methylene bridge, and wherein the third one of R1, R2 and R3 is a hydrogen atom,
wherein the solid phloroglucinolic resin is further defined by formula (II) 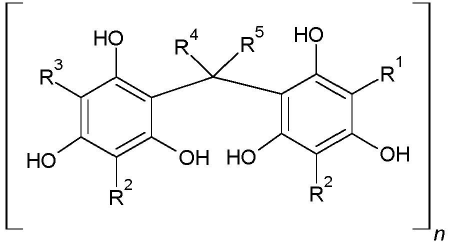
wherein n is an integer from 1 to 20, wherein R1 in a first phloroglucinolic unit on the left has been replaced with a di-substituted methylene bridge at the 2 position, and R3 in the second phloroglucinolic unit on the right has been replaced with the same di-substituted methylene bridge at the 6 position; wherein R3 on the first phloroglucinolic unit on the left and R1 on the second phloroglucinolic unit on the right form separate di-substituted methylene bridges, or can be a hydrogen atom, while R2 is a hydrogen atom, and wherein R4 and R5 may be the same or different, and are alkyl groups,
where the resin has a weight average molecular weight (Mw) of greater than 270 and less than 900 g/mole as determined by gel permeation chromatography (GPC) using a polystyrene standard.

2. The solid phloroglucinolic resin as claimed in claim 1, wherein R4 and R5 are both methyl groups, and wherein the di-substituted methylene bridge formed is an isopropyliden bridge.

3. The solid phloroglucinolic resin as claimed in claim 1,
wherein R4 is an ethyl group and R5 is a methyl group, and wherein the di-substituted methylene bridge formed is a 2,2 di-substituted butane bridge,
or
wherein R4 is an isopropyl group and R5 is a methyl group, wherein the di-substituted methylene bridge formed is a 2,2 di-substituted, 4-methyl pentane bridge.

4. A solid phloroglucinolic resin as claimed in claim 1, being the reaction product of a phloroglucinol and a ketone in the presence of an acid catalyst.

5. The solid phloroglucinolic resin as claimed in claim 4, wherein the ketone is selected from the group consisting of acetone, methyl ethyl ketone (MEK), diethyl ketone, ethyl butyl ketone, diisobutyl ketone, methyl isopropyl ketone, diisopropyl ketone, and methyl isobutyl ketone (MIBK).

6. The solid phloroglucinolic resin as claimed in claim 4 or 5, wherein the ketone is selected from the group consisting of acetone, methyl ethyl ketone, and methyl isobutyl ketone.

7. The solid phloroglucinolic resin as claimed in claims 4 to 6, wherein the acid catalyst is selected from the group consisting of inorganic acids and acid cation exchange resins.

8. The solid phloroglucinolic resin as claimed in any of claims 4 to 7, wherein a molar ratio of ketone to phloroglucinol is more than 1:1 and less than 20:1.

9. The solid phloroglucinolic resin as claimed in any of the preceding claims, wherein the resin includes less than 40 wt.% unreacted phloroglucinol.

10. The solid phloroglucinolic resin as claimed in any of the preceding claims, where the resin has a weight average molecular weight (Mw) of greater than 400 and less than 700 g/mole as determined by gel permeation chromatography (GPC) using a polystyrene standard.

11. The solid phloroglucinolic resin as claimed in any of the proceeding claims, where the resin has a softening point of greater than 80 °C as determined as described in the description.

12. The solid phloroglucinolic resin as claimed in any of the preceding claims, where the resin includes less than 1.5 wt.% water.

13. The solid phloroglucinolic resin as claimed in any of the proceeding claims, where the resin has pentamer or higher oligomer content of less than 55% according to gel permeation chromatography (GPC) using a polystyrene standard.

14. A vulcanizable rubber composition comprising:
a. a vulcanizable rubber;
b. a curative; and
c. a solid phloroglucinolic resin as claimed in any of the preceding claims.

15. A vulcanized rubber prepared from the vulcanizable composition of claim 14.

## Patentansprüche

1. Festes Phloroglucin-Harz, umfassend mehrere Phloroglucin-Einheiten, definiert durch Formel (1) 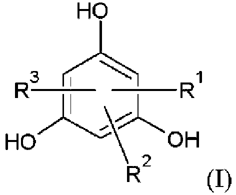
wobei sich mindestens eines von R1, R2 und R3 mit einer zweiten Phloroglucin-Einheit unter Bildung einer disubstituierten Methylenbrücke kombiniert, wobei das zweite von R1, R2 und R3 ein Wasserstoffatom ist oder sich mit einer dritten Phloroglucin-Einheit unter Bildung einer weiteren disubstituierten Methylenbrücke kombiniert, und wobei das dritte von R1, R2 und R3 ein Wasserstoffatom ist,
wobei das feste Phloroglucin-Harz ferner definiert ist durch Formel (II) 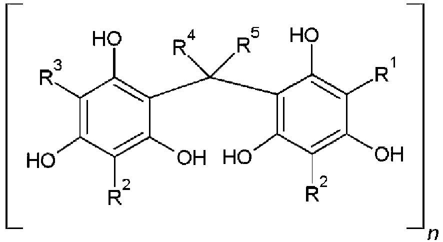
wobei n eine ganze Zahl von 1 bis 20 ist, wobei R1 in einer ersten Phloroglucin-Einheit auf der linken Seite an der Position 2 durch eine disubstituierte Methylenbrücke ersetzt wurde und R3 in der zweiten Phloroglucin-Einheit auf der rechten Seite an der Position 6 durch dieselbe disubstituierte Methylenbrücke ersetzt wurde, wobei R3 an der ersten Phloroglucin-Einheit auf der linken Seite und R1 an der zweiten Phloroglucin-Einheit auf der rechten Seite jeweils separate disubstituierte Methylenbrücken bilden oder ein Wasserstoffatom sein können, während R2 ein Wasserstoffatom ist, und wobei R4 und R5 gleich oder verschieden sein können und Alkylgruppen sind,
wobei das Harz ein gewichtsmittleres Molekulargewicht (Mw) von mehr als 270 und weniger als 900 g/mol aufweist, wie durch Gelpermeationschromatographie (GPC) unter Verwendung eines Polystyrol-Standards bestimmt.

2. Festes Phloroglucin-Harz nach Anspruch 1, wobei R4 und R5 beide Methylgruppen sind und wobei die gebildete disubstituierte Methylenbrücke eine Isopropylidenbrücke ist.

3. Festes Phloroglucin-Harz nach Anspruch 1,
wobei R4 eine Ethylgruppe und R5 eine Methylgruppe ist und wobei die gebildete disubstituierte Methylenbrücke eine 2,2-disubstituierte Butanbrücke ist,
oder
wobei R4 eine Isopropylgruppe und R5 eine Methylgruppe ist, wobei die gebildete disubstituierte Methylenbrücke eine 2,2-disubstituierte 4-Methylpentanbrücke ist.

4. Festes Phloroglucin-Harz nach Anspruch 1, welches das Reaktionsprodukt aus einem Phloroglucin und einem Keton in Gegenwart eines Säurekatalysators ist.

5. Festes Phloroglucin-Harz nach Anspruch 4, wobei das Keton aus der Gruppe ausgewählt ist, die aus Aceton, Methylethylketon (MEK), Diethylketon, Ethylbutylketon, Diisobutylketon, Methylisopropylketon, Diisopropylketon und Methylisobutylketon (MIBK) besteht.

6. Festes Phloroglucin-Harz nach Anspruch 4 oder 5, wobei das Keton aus der Gruppe ausgewählt ist, die aus Aceton, Methylethylketon und Methylisobutylketon besteht.

7. Festes Phloroglucin-Harz nach den Ansprüchen 4 bis 6, wobei der Säurekatalysator aus der Gruppe ausgewählt ist, die aus anorganischen Säuren und sauren Kationenaustauscherharzen besteht.

8. Festes Phloroglucin-Harz nach einem der Ansprüche 4 bis 7, wobei das Molverhältnis von Keton zu Phloroglucin mehr als 1:1 und weniger als 20:1 beträgt.

9. Festes Phloroglucin-Harz nach einem der vorhergehenden Ansprüche, wobei das Harz weniger als 40 Gew.-% nicht umgesetztes Phloroglucin enthält.

10. Festes Phloroglucin-Harz nach einem der vorhergehenden Ansprüche, wobei das Harz ein gewichtsmittleres Molekulargewicht (Mw) von mehr als 400 und weniger als 700 g/mol aufweist, wie durch Gelpermeationschromatographie (GPC) unter Verwendung eines Polystyrol-Standards bestimmt.

11. Festes Phloroglucin-Harz nach einem der vorhergehenden Ansprüche, wobei das Harz einen Erweichungspunkt von mehr als 80 °C aufweist, wie in der Beschreibung beschrieben bestimmt.

12. Festes Phloroglucin-Harz nach einem der vorhergehenden Ansprüche, wobei das Harz weniger als 1,5 Gew.-% Wasser enthält.

13. Festes Phloroglucin-Harz nach einem der vorhergehenden Ansprüche, wobei das Harz einen Gehalt an Pentameren oder höheren Oligomeren von weniger als 55 % aufweist, wie durch Gelpermeationschromatographie (GPC) unter Verwendung eines Polystyrol-Standards bestimmt.

14. Vulkanisierbare Kautschukzusammensetzung, umfassend:
a. einen vulkanisierbaren Kautschuk,
b. ein Vulkanisationsmittel und
c. ein festes Phloroglucin-Harz nach einem der vorhergehenden Ansprüche.

15. Vulkanisierter Kautschuk, hergestellt aus der vulkanisierbaren Zusammensetzung nach Anspruch 14.

## Revendications

1. Résine phloroglucinolique solide comprenant de multiples unités phloroglucinoliques définies par la formule (I) 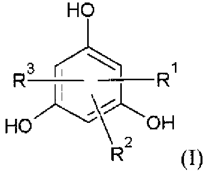
dans laquelle au moins un des éléments de R1, R2 et R3 se combine avec une deuxième unité phloroglucinolique pour former un pont méthylène disubstitué, formule dans laquelle le deuxième élément de R1, R2 et R3 est un atome d'hydrogène ou bien se combine avec une troisième unité phloroglucinolique pour former un autre pont méthylène disubstitué, et formule dans laquelle le troisième élément de R1, R2 et R3 est un atome d'hydrogène,
où la résine phloroglucinolique solide est définie en outre par la formule (II) 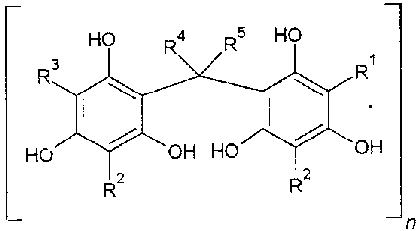
dans laquelle n est un nombre entier allant de 1 à 20, formule dans laquelle R1, dans une première unité phloroglucinolique sur la gauche, a été remplacé par un pont méthylène disubstitué au niveau de la position 2, et R3, dans la deuxième unité phloroglucinolique sur la droite, a été remplacé par le même pont méthylène disubstitué au niveau de la position 6 ; formule dans laquelle R3, sur la première unité phloroglucinolique sur la gauche, et R1, sur la deuxième unité phloroglucinolique sur la droite, forment des ponts méthylène disubstitués distincts, ou bien peuvent être un atome d'hydrogène, tandis que R2 est un atome d'hydrogène, et formule dans laquelle R4 et R5 peuvent être les mêmes ou différents et sont des groupes alkyles, où la résine a une masse moléculaire moyenne en poids (Mw) supérieure à 270 et inférieure à 900 g/mole, ladite masse étant déterminée par chromatographie par perméation de gel (GPC), ladite chromatographie utilisant un étalon de polystyrène.

2. Résine phloroglucinolique solide comme revendiquée dans la revendication 1, résine dans laquelle R4 et R5 sont tous les deux des groupes méthyles, et dans laquelle le pont méthylène disubstitué formé est un pont isopropylidène.

3. Résine phloroglucinolique solide comme revendiquée dans la revendication 1,
résine dans laquelle R4 est un groupe éthyle et R5 est un groupe méthyle, et dans laquelle le pont méthylène disubstitué formé est un pont butane 2,2 disubstitué,
ou bien
résine dans laquelle R4 est un groupe isopropyle et R5 est un groupe méthyle, dans laquelle le pont méthylène disubstitué formé est un pont 4-méthylpentane 2,2 disubstitué.

4. Résine phloroglucinolique solide comme revendiquée dans la revendication 1, ladite résine étant le produit de réaction d'un phloroglucinol et d'une cétone, en présence d'un catalyseur acide.

5. Résine phloroglucinolique solide comme revendiquée dans la revendication 4, résine dans laquelle la cétone est sélectionnée parmi le groupe comprenant de l'acétone, de la méthyléthylcétone (MEK), de la diéthylcétone, de l'éthylbutylcétone, de la diisobutylcétone, de la méthylisopropylcétone, de la diisopropylcétone et de la méthylisobutylcétone (MIBK).

6. Résine phloroglucinolique solide comme revendiquée dans la revendication 4 ou 5, résine dans laquelle la cétone est sélectionnée parmi le groupe comprenant de l'acétone, de la méthyléthylcétone et de la méthylisobutylcétone.

7. Résine phloroglucinolique solide comme revendiquée dans l'une quelconque des revendications 4 à 6, résine dans laquelle le catalyseur acide est sélectionné parmi le groupe comprenant des acides inorganiques et des résines échangeuses de cations acides.

8. Résine phloroglucinolique solide comme revendiquée dans l'une quelconque des revendications 4 à 7, résine dans laquelle un rapport molaire entre la cétone et le phloroglucinol est supérieur à 1:1 et inférieur à 20:1.

9. Résine phloroglucinolique solide comme revendiquée dans l'une quelconque des revendications précédentes, où la résine comprend moins de 40 % en poids de phloroglucinol n'ayant pas réagi.

10. Résine phloroglucinolique solide comme revendiquée dans l'une quelconque des revendications précédentes, où la résine a une masse moléculaire moyenne en poids (Mw) supérieure à 400 et inférieure à 700 g/mole, ladite masse étant déterminée par chromatographie par perméation de gel (GPC), ladite chromatographie utilisant un étalon de polystyrène.

11. Résine phloroglucinolique solide comme revendiquée dans l'une quelconque des revendications précédentes, où la résine a un point de ramollissement supérieur à 80°C tel qu'il a été déterminé et décrit dans la description.

12. Résine phloroglucinolique solide comme revendiquée dans l'une quelconque des revendications précédentes, où la résine contient moins de 1,5 % en poids d'eau.

13. Résine phloroglucinolique solide comme revendiquée dans l'une quelconque des revendications précédentes, où la résine a une teneur en pentamère ou en oligomère supérieur, qui est inférieure à 55 % conformément à la chromatographie par perméation de gel (GPC), ladite chromatographie utilisant un étalon de polystyrène.

14. Composition de caoutchouc vulcanisable comprenant :
a. un caoutchouc vulcanisable ;
b. un agent de durcissement ; et
c. une résine phloroglucinolique solide comme revendiquée dans l'une quelconque des revendications précédentes.

15. Caoutchouc vulcanisé préparé à partir de la composition vulcanisable de la revendication 14.
